Europäisches Patentamt

European Patent Office

Office européen des brevets

(19)

(11) Veröffentlichungsnummer: **0 218 955 B1**

(12) **EUROPÄISCHE PATENTSCHRIFT**

(45) Veröffentlichungstag der Patentschrift: **13.03.91**

(51) Int. Cl.⁵: **G06F 13/42**

(21) Anmeldenummer: **86113095.3**

(22) Anmeldetag: **23.09.86**

(54) **Verfahren zur bit- und bytesynchronen Datenübertragung über eine serielle Schnittstelle.**

(30) Priorität: **30.09.85 DE 3534865**

(43) Veröffentlichungstag der Anmeldung:
**22.04.87 Patentblatt 87/17**

(45) Bekanntmachung des Hinweises auf die
Patenterteilung:
**13.03.91 Patentblatt 91/11**

(84) Benannte Vertragsstaaten:
**BE CH DE FR GB IT LI NL SE**

(56) Entgegenhaltungen:

**IEEE ELECTRO, Band 7, Mai 1982, Seiten 1-8
(25/4), IEEE, New York, US; J.T. TWARDY:
"Fourth generation architecture allows performance of larger jobs with smaller programs"**

**ELEKTRONIK, Band 33, Nr. 3, Juni 1984, Seiten 73-76, München, DE; R. SCHMID:
"Multiprozessorsystem mit Einchipcomputern"**

**IEEE ELECTRO, Band 8, Suppl., 1983, Seiten
1-11 (6/2), IEEE, New York, US; R. KOSTER:
"Piggy-back microcomputer serves as formfactor prototyping component for TMS7000
family"**

**THE BELL SYSTEM TECHNICAL JOURNAL,
Band 60, Nr. 7, Teil 2, September 1981, Seiten 1449-1462, American Telephone and Telegraph Co., Murray Hill, New Jersey, US; J.R.
BODDIE et al.: "Architecture and performance"**

(73) Patentinhaber: **Siemens Aktiengesellschaft
Wittelsbacherplatz 2
W-8000 München 2(DE)**

(72) Erfinder: **Jensen, Peter-Grauer
Starupvej 225
DK-08340 Malling(DK)**

## Beschreibung

Die Erfindung betrifft ein Verfahren zur bit- und bytesynchronen Datenübertragung von einer peripheren Sendeeinrichtung über ein Empfangsschieberegister und ein Sendeschieberegister einer seriellen Schnittstelle eines Mikrocomputers zu einer peripheren Empfangseinrichtung, wobei das Empfangsschieberegister und das Sendeschieberegister extern über einen Takteingang bitweise getaktet werden und bei Anzeige eines Empfangs- bzw. Sendesignals das Auslesen des Empfangs- und das Laden des Sendeschieberegisters vom Mikrocomputer durchgeführt wird.

Die Empfangs- und Sendeschieberegister derartiger serieller Schnittstellen, die insbesondere zur Datenübertragung mit hoher Geschwindigkeit dienen, werden also nur von einem externen Bittakt weitergeschaltet. Sind nun aber mehrere Bit zu einem Byte zusammengefaßt, verschiebt sich bei einzelnen Bitfehlern der Byterahmen und trotz weiterhin bitsynchroner Datenübertragung ist der Inhalt der Bytes verfälscht.

In THE BELL SYSTEM TECHNICAL JOURNAL, Band 60, Nr. 7, Teil 2, September 1981, Seiten 1449 - 1462, American Telephone and Telegraph Co., Murray Hill, New Yersey, US; J.R. Boddie et al.: 'Architecture and performance" ist auf S. 1458, Zeilen 8 - 35 eine Möglichkeit angegeben den Synchronzustand stets zu gewährleisten. Der dort beschriebene Mikrocomputer verfügt über je fünf Anschlüsse zur seriellen Datenein- und ausgabe. Dies sind je ein Eingang für den Bittakt, ein Datenein- bzw. ausgang, je ein Freigabeeingang und je ein Synchronisationseingang. Bei Beginn einer Datenübertragung wird an den Synchronisationseingang ein Synchronisationssignal abgegeben und dadurch das jeweilige Schieberegister zurückgesetzt. Ist jedoch bei einem Empfangs- und Sendeschieberegister eines Mikrocomputers ein solcher Synchronisationseingang nicht vorhanden, dann sind im Stand der Technik die Schieberegister über den Bytetakt nicht rücksetzbar und die Bytesynchronisation kann nicht mehr wiederhergestellt werden.

Der Erfindung liegt die Aufgabe zugrunde, auch beim Fehlen eines eigenen Synchroneinganges mittels eines Bytetaktes, die Wiederherstellung der Synchronisation zu ermöglichen.

Diese Aufgabe wird erfindungsgemäß dadurch gelöst, daß der Bittakt dem Takteingang und ein Bytetakt einem Interrupt-Eingang fortlaufend dem Mikrocomputer zugeleitet werden und der Zugang zum Empfangsschieberegister mittels eines Freigabeeingangs vom Mikrocomputer freigebbar, der Ausgang des Sendeschieberegisters mittels Anlegen eines definierten Pegels an einem zweiten Freigabeeingang hingegen immer freigegeben ist, daß zur Erzeugung eines Synchronzustandes der Zugang zum Empfangsschieberegister freigegeben und nach dem Auslesen bei Vorliegen eines Empfangssignals wieder gesperrt wird und daß nach dem Leeren des Sendeschieberegisters angezeigt von einem Sendesignal der Zugang zum Empfangsschieberegister durch den Bytetakt wieder freigegeben und das Sendeschieberegister geladen wird.

Der Bytetakt wird also an einen bereits vorhandenen Interrupt-Eingang des Mikrocomputers geführt; die Erzeugung des Initialzustandes wird somit durch einen Interrupt gestartet.

Dieses Verfahren hat den Vorteil, daß der zusätzliche Schaltungsaufwand auf ein Minimum beschränkt bleibt und keine zusätzlichen Bauteile verwendet werden müssen.

Eine vorteilhafte Weiterbildung der Erfindung gemäß Patentanspruch 2 dient der Überwachung der Synchronisation; der Zustand der Schieberegister wird demgemäß vor und nach dem Byteende geprüft. Vor dem Byteende ist das Auslesen des Empfangsschieberegisters und das Laden des Sendeschieberegisters noch nicht angezeigt und vom Mikrocomputer noch nicht durchgeführt worden. Nach dem Byteende ist dagegen das Auslesen und Laden erfolgt und der jeweils geänderte Anzeigenstatus umgekehrt. Dadurch ist die Überwachung besonders zuverlässig.

Da in dem Mikrocomputer konstante, befehlslaufzeitbedingte Verzögerungen auftreten, beispielsweise durch parallele Bearbeitung von Einstellbefehlen, ist bei der Freigabe und Überwachung der Datenübertragung zu berücksichtigen, daß beim Sperren des Zugangs zum Empfangsschieberegister bereits mindestens ein Bit empfangen wird und mit dem Laden des Sendeschieberegisters mindestens ein Bit vor dem Bytetakt begonnen wird. Dadurch wird eine konstante Verschiebung der Bits innerhalb des Byterahmens vermieden.

Die Erfindung wird anhand eines Ausführungsbeispieles und zweier Zeichnungen beschrieben. Es zeigen:

FIG 1     ein schematisches Blockschaltbild des Ausführungsbeispieles und

FIG 2     den zeitlichen Ablauf der wesentlichen Signale.

Die Synchronisation der Datenübertragung von einem Datensender Q zu einem Speicher M über einen Mikrocomputer μC erfolgt in folgenden Schritten: 1. Erzeugung eines Initialzustandes, 2. synchrongerechte Freigabe eines Empfangsschieberegisters SI und 3. Überwachung der Synchronisation. Diese Überwachung findet bei jedem übertragenen Byte statt und bei Erkennen eines Fehlers werden alle drei Schritte wiederholt.

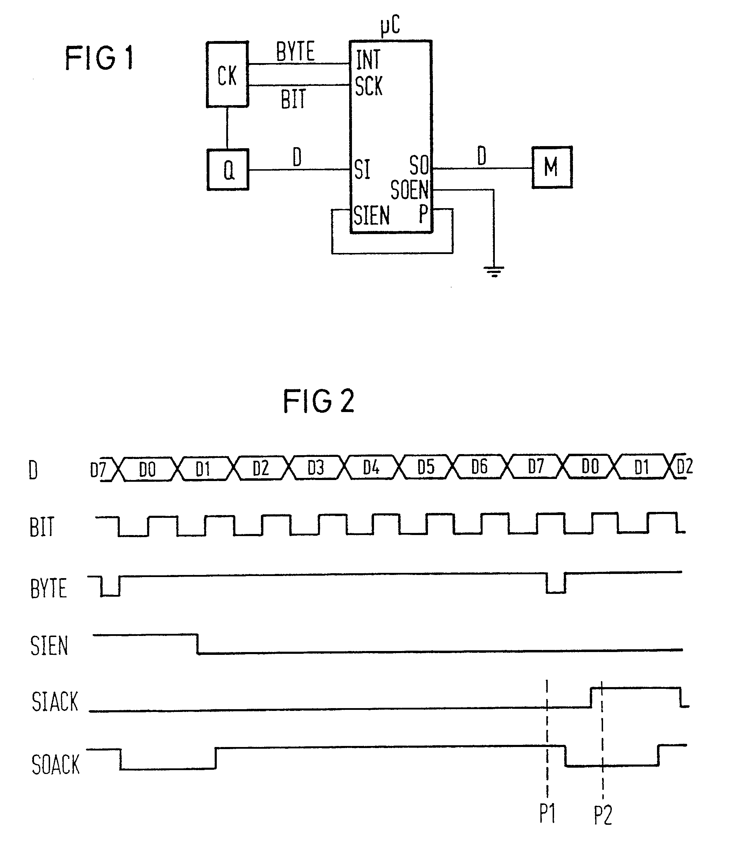

Wie FIG 1 zeigt, ist eine Taktversorgungseinrichtung CK mit dem Mikrocomputer μC verbunden, dessen Interrupt-Eingang INT ein Bytetakt BYTE und dessen seriellem Takteingang SCK ein Bittakt BIT zugeführt wird. Der Datensender Q, der Daten D an das Empfangsschieberegister SI der seriellen Schnittstelle des Mikrocomputers μC überträgt, ist gleich-falls mit der Taktversorgungseinrichtung CK verbunden. Die empfangenen Daten D werden vom Mikrocomputer μC verändert, beispielsweise umcodiert, und über ein Sendeschieberegister SO an den Speicher M weitergeleitet.

Vom Mikrocomputer μC wird über einen Ausgang P eine Zugangsberechtigung SIEN zum Empfangsschieberegister SI freigegeben. Ein Anschluß "Ausgangsberechtigung" SOEN des Sendeschieberegisters SO ist mit Masse verbunden und dadurch immer freigegeben.

FIG 2 zeigt zur Verdeutlichung des Verfahrensablaufes den jeweiligen Status bestimmter Signale. Zur Erzeugung eines Synchronzustandes wird die Zugangsberechtigung SIEN zum Empfangsschieberegister SI freigegeben, so daß bei Anzeige eines Empfangssignals SIACK dessen Auslesen und die Übernahme seines Inhaltes durch den Mikrocomputer μC durchgeführt werden kann. Daraufhin wird das Empfangsschieberegister SI gesperrt. Nach dem Leeren des Sendeschieberegisters SO, angezeigt von einem Sendesignal SOACK, wird die Zugangsberechtigung SIEN ein Bit D1 nach dem Bytetakt BYTE freigegeben. Diese Verzögerung ist in diesem Ausführungsbeispiel zu berücksichtigen, da gleichzeitig mit dem Sperren des Empfangsschieberegisters SI schon ein erstes Datenbit geladen wird. Aus gleichem Grund muß mit dem Laden des Sendeschieberegisters SO schon einen Bittakt BIT vor dem Bytetakt BYTE begonnen werden.

Zur Überwachung der Synchronisation wird das Empfangs- und das Sendesignal SIACK, SOACK der Schieberegister SI, SO zu verschiedenen Zeitpunkten P1, P2 geprüft. Vor dem Byteende muß gelten, daß das Empfangsschieberegister SI noch nicht ausgelesen und das Sendeschieberegister SO noch nicht geladen ist. Nach dem Byteende gilt das Gegenteil und das Empfangs- und das Sendesignal SIACK, SOACK wird entsprechend abgegeben. Nach der Prüfung wird vom Mikrocomputer μC die serielle Eingabe gelesen und die nächste Ausgabe vorbereitet. Damit wird das Empfangs- und das Sendesignal SIACK, SOACK zurückgestellt.

## Ansprüche

1. Verfahren zur bit- und bytesynchronen Datenübertragung von einer peripheren Sendeeinrichtung (Q) über ein Empfangsschieberegister (SI) und ein Sendeschieberegister (SO) einer seriellen Schnittstelle eines Mikrocomputers (μC) zu einer peripheren Empfangseinrichtung (M), wobei das Empfangsschieberegister (SI) und das Sendeschieberegister (SO) extern über einen Takteingang (SCK) bitweise getaktet werden (BIT) und bei Anzeige eines Empfangs-bzw. Sendesignals (SIACK, SOACK) das Auslesen des Empfangs-(SI) und das Laden des Sendeschieberegisters (SO) vom Mikrocomputer (μC) durchgeführt wird,
**dadurch gekennzeichnet,**
daß der Bittakt (BIT) dem Takteingang (SCK) und ein Bytetakt (BYTE) einem Interrupt-Eingang (INT) fortlaufend dem Mikrocomputer (μC) zugeleitet werden und der Zugang zum Empfangsschieberegister (SI) mittels eines Freigabeeingangs (SIEN) vom Mikrocomputer (μC) freigebbar, der Ausgang des Sendeschieberegisters (SO) mittels Anlegen eines definierten Pegels an einem zweiten Freigabeeingang (SOEN) hingegen immer freigegeben ist, daß zur Erzeugung eines Synchronzustandes der Zugang zum Empfangsschieberegister (SI) freigegeben und nach dem Auslesen bei Vorliegen eines Empfangssignals (SIACK) wieder gesperrt wird und daß nach dem Leeren des Sendeschieberegisters (SO) angezeigt von einem Sendesignal (SOACK) der Zugang zum Empfangsschieberegister (SI) durch den Bytetakt (BYTE) wieder freigegeben und das Sendeschieberegister (SO) geladen wird.

2. Verfahren nach Anspruch 1,
**dadurch gekennzeichnet,**
daß zur Überwachung der Synchronisation der Zustand (SIACK, SOACK) der Schieberegister (SI, SO) vor und nach dem Byteende geprüft wird, wobei vor dem Byteende vom Mikrocomputer (μC) das Empfangsschieberegister (SI) noch nicht ausgelesen und das Sendeschieberegister (SO) noch nicht geladen wird, nach dem Byteende aber durchgeführt und angezeigt wird.

3. Verfahren nach einem der vorhergehenden Ansprüche, **dadurch gekennzeichnet,**
daß konstante, befehlslaufzeitbedingte Verzögerungen bei der Freigabe und Überwachung der Datenübertragung entsprechend berücksichtigt werden, wobei beim Sperren des Zugangs zum Empfangsschieberegister (SI) bereits mindestens ein Bit (D0) empfangen wird und mit dem Laden des Sendeschieberegisters (SO) mindestens ein Bit (D7) vor dem Bytetakt (BYTE) begonnen wird.



## Claims

1. Method of bit-synchronous and byte-synchronous data transmission from a peripheral transmission device (Q) to a peripheral receiving device (M) via a receiving shift register (SI) and a transmitting shift register (SO) of a serial interface of a microcomputer (µC), the receiving shift register (SI) and the transmitting shift register (SO) being externally clocked bit by bit (BIT) via a clock input (SCK) and, upon indication of a receiving or transmitting signal (SIACK, SOACK), the reading-out of the receiving shift register (SI) and the loading of the transmitting shift register (SO) being respectively carried out by the microcomputer (µC), characterized in that the bit clock (BIT) is continuously supplied to the clock input (SCK) and a byte clock (BYTE) is continuously supplied to an interrupt input (INT) of the microcomputer (µC) and the access to the receiving shift register (SI) can be enabled by the microcomputer (µC) by means of an enable input (SIEN), the output of the transmitting shift register (SO) on the other hand is always enabled by means of applying a defined level to a second enable input (SOEN), in that, for generating a synchronized status, the access to the receiving shift register (SI) is enabled and, after reading-out, is inhibited again in the presence of a receiving signal (SIACK) and in that, after the emptying of the transmitting shift register (SO), indicated by a transmitting signal (SOACK), the access to the receiving shift register (SI) is re-enabled by the byte clock (BYTE) and the transmitting shift register (SO) is loaded.

2. Method according to Claim 1, characterized in that, for monitoring the synchronization, the status (SIACK, SOACK) of the shift registers (SI, SO) is checked before and after the end of a byte, in which method before the end of the byte the microcomputer (µC) has not yet read out the receiving shift register (SI) and not yet loaded the transmitting shift register (SO), but after the end of the byte carries out the said reading and indicates the said loading.

3. Method according to one of the preceding claims, characterized in that constant delays in the enabling and monitoring of the data transmission, caused by command execution times, are correspondingly taken into consideration, at least one bit (D0) being already received when the access to the receiving shift register (SI) is inhibited and the loading of the transmitting shift register (SO) being begun at least one bit (D7) before the byte clock (BYTE).

## Revendications

1. Procédé pour réaliser la transmission de données, synchrones au niveau des bits et des octets, à partir d'un dispositif d'émission périphérique (Q), par l'intermédiaire d'un registre à décalage de réception (SI) et d'un registre à décalage d'émission (SE) d'un interface série d'un micro-ordinateur (mC), en direction d'un dispositif de réception périphérique (M), et selon lequel le registre à décalage de réception (SI) et le registre à décalage d'émission (SE) sont commandés de façon externe bit-par-bit (BIT) par l'intermédiaire d'une entrée de cadence (SCK) et, lors de l'affichage d'un signal de réception ou d'émission (SIACK, SOACK), la lecture du registre à décalage de réception (SI) et le chargement du registre à décalage d'émission (SO) sont exécutés par le micro-ordinateur (mC), **caractérisé par le fait que** la cadence binaire (BIT) et une cadence d'octets (BYTE) sont envoyées en permanence respectivement à l'entrée de cadence (SCK) et à une entrée d'interruption (INT) du micro-ordinateur (mC) et que l'accès au registre à décalage de réception (SI) doit être libéré au moyen d'une entrée de libération (SIEN) par le micro-ordinateu, la sortie du registre à décalage d'émission (SO) étant au contraire en permanence libérée au moyen de l'application d'un niveau défini à une seconde entrée de libération (SOEN), que pour la production d'un état synchrone, l'accès au registre à décalage de réception (SI) est libéré et est à nouveau bloqué, après la lecture, lors de la présence d'un signal de réception (SIAK), et qu'après le vidage du registre à décalage d'émission (SO) indiqué par un signal d'émission (SOAK), l'accès au registre à décalage de réception (SI) est a nouveau libéré par l'impulsion de cadence d'octets (BYTE) et le registre à décalage d'émission (SO) est chargé.

2. Procédé suivant la revendication 1, caractérisé par le fait que pour le contrôle de la synchronisation, l'état (SIACK, SOACK) des registres à décalage (SI, SO) est contrôlé avant et après la fin d'un octet, auquel cas, avant la fin de l'octet, le registre à décalage de réception (SI) n'est pas encore lu par le micro-ordinateur (mC) et le registre à décalage initial (O) n'est pas encore chargé dans le micro-ordinateur, tandis que ceci est exécuté et affiché après la fin de l'octet.

3. Procédé suivant l'une des revendications précédentes, caractérisé par le fait que des retards constants conditionnés par le temps de propagation des instructions sont pris en compte de façon correspondante lors de la libération et du contrôle de la transmission de données, auquel cas, lors du blocage de l'accès au registre à décalage de réception (SI), déjà au moins un bit (D0) est reçu et que le chargement du registre à décalage d'émission (SO) commence au moins un bit (D7) avant l'impulsion de cadence d'octets (BYTE).

## FIG 1

## FIG 2